# EUROPÄISCHE PATENTSCHRIFT

(11) **EP 2 326 923 B1**
(45) Veröffentlichungstag und Bekanntmachung des Hinweises auf die Patenterteilung: **27.12.2017**
(21) Anmeldenummer: 09781790.2
(22) Anmeldetag: 13.08.2009
(51) Int. Cl.: G01F 1/684

(54) **SENSORANORDNUNG ZUR BESTIMMUNG EINES PARAMETERS EINES FLUIDEN MEDIUMS**
SENSOR ARRANGEMENT FOR DETERMINING A PARAMETER OF A FLUID MEDIUM
SYSTÈME DE CAPTEUR POUR DÉTERMINER UN PARAMÈTRE D'UN FLUIDE

(30) Priorität: 17.09.2008 DE 102008042155
(43) Veröffentlichungstag der Anmeldung: 01.06.2011
(73) Patentinhaber: Robert Bosch GmbH, 70442 Stuttgart (DE)
(72) Erfinder: Renninger, Erhard, 71706 Markgroeningen (DE); Briese, Achim, 71277 Rutesheim (DE); Hecht, Hans, 70567 Stuttgart (DE); Wagner, Ulrich, 70197 Stuttgart (DE); Konzelmann, Uwe, 71679 Asperg (DE); Gmelin, Christoph, 70597 Stuttgart (DE)
(86) Internationale Anmeldenummer: PCT/EP2009/060482
(87) Internationale Veröffentlichungsnummer: WO 2010/031644

(56) Entgegenhaltungen:
- EP-A1- 1 065 476
- DE-A1- 2 751 159
- DE-A1- 10 345 584
- DE-A1-102004 060 063

## Beschreibung

### Stand der Technik

Die Erfindung geht aus von bekannten Sensoranordnungen zur Bestimmung wenigstens eines Parameters eines in einer Leitung strömenden fluiden Mediums. Derartige Vorrichtungen werden beispielsweise eingesetzt, um Ansaugluftmassen einer Brennkraftmaschine zu messen. Insbesondere werden derartige Vorrichtungen in Form von Heißfilmluftmassenmessern eingesetzt. Es sind jedoch auch andere Arten von Vorrichtungen zur Bestimmung anderer oder weiterer Parameter denkbar, beispielsweise Temperaturfühler, Geschwindigkeitsmesser oder ähnliche Messvorrichtungen, sowie andere Messprinzipien als das genannte Heißfilmluftmassenmesserprinzip.

Heißfilmluftmassenmesser sind beispielsweise in DE 102 53 970 A1 beschrieben. Dort wird eine Vorrichtung offenbart, welche ein Teil umfasst, welches mit einer vorbestimmten Ausrichtung in Bezug auf eine Hauptströmungsrichtung in eine vom strömenden Medium durchströmte Leitung einbringbar ist. Dabei durchströmt ein Teilstrom des Mediums wenigstens einen in dem Teil vorgesehenen Messkanal, in welchem ein Messelement angeordnet ist. Zwischen Einlass und Messelement weist der Messkanal einen gekrümmten Abschnitt zur Umlenkung des durch den Einlass in den Messkanal eingetretenen Teilstroms des Mediums auf, wobei der gekrümmte Abschnitt im weiteren Verlauf in einen Abschnitt übergeht, in welchem das Messelement angeordnet ist. Dabei ist im Messkanal ein Mittel vorgesehen, welches die Strömung leitet und einer Ablösung der Strömung des Medienteilstroms von den Kanalwänden des Messkanals entgegenwirkt. Weiterhin ist der Eingangsbereich im Bereich der Öffnung, welche der Hauptströmungsrichtung entgegenweist, mit schrägen oder gekrümmten Flächen versehen, welche so gestaltet sind, dass in den Eingangsbereich einströmendes Medium von dem Teil des Messkanals, welcher zum Messelement führt, weggelenkt wird. Dies bewirkt, dass im Medium enthaltene Flüssigkeits- oder Festkörperteilchen aufgrund ihrer Massenträgheit nicht zum Messelement gelangen und dieses verschmutzen können.

Vorrichtungen, wie beispielsweise die in der DE 102 53 970 A1 gezeigte Vorrichtung, müssen in der Praxis einer Vielzahl von Anforderungen und Randbedingungen genügen. Diese Randbedingungen sind aus der Literatur weitgehend bekannt und beispielsweise in DE 102 53 970 A1 beschrieben. Neben dem Ziel, einen Druckabfall an den Vorrichtungen insgesamt durch geeignete strömungstechnische Ausgestaltung zu verringern, besteht eine der hauptsächlichen Herausforderungen darin, die Signalqualität derartiger Vorrichtungen weiter zu verbessern. Diese Signalqualität bezieht sich insbesondere auf den Signalhub, welcher beispielsweise durch einen Durchsatz des Mediums durch den zum Sensorelement führenden Messkanal bestimmt wird, sowie gegebenenfalls auf die Verminderung von Signaldrift und der Verbesserung des Signal-zu-Rausch-Verhältnisses. Die beispielsweise in DE 102 53 970 A1 beschriebene Ausgestaltung der Einlassöffnung durch Flüssigkeits- und Staubpartikel abweisende Fläche dient insbesondere dem genannten Zweck der Verringerung der Signaldrift.

Bei üblichen Sensoranordnungen der beschriebenen Art ragt in der Regel ein Sensorträger mit einem darauf aufgebrachten oder eingebrachten Sensorchip in den Messkanal hinein. Beispielsweise kann der Sensorchip in den Sensorträger eingeklebt oder auf diesen aufgeklebt sein. Der Sensorträger kann beispielsweise mit einem Bodenblech aus Metall, auf welchem auch eine Elektronik eine Ansteuer- und Auswerteschaltung in Form einer Leiterplatte aufgeklebt sein kann, eine Einheit. Beispielsweise kann der Sensorträger als angespritztes Kunststoffteil eines Elektronikmoduls ausgestaltet sein. Der Sensorchip und die Ansteuer- und Auswerteschaltung können beispielsweise durch Bond-Verbindungen miteinander verbunden werden. Das derart entstandene Elektronikmodul kann beispielsweise in ein Sensorgehäuse eingeklebt werden, und der gesamte Steckfühler kann mit Deckeln verschlossen werden. Ein Beispiel einer derartigen Anordnung ist in DE 103 45 584 A1 oder in EP 0 720 723 B1 beschrieben.

Dabei hat es sich gezeigt, dass die Kontur der Anströmkante des Sensorträgers, welcher in den Messkanal hineinragt, von entscheidender Bedeutung für die Signalqualität der Sensoranordnung ist. So wird beispielsweise in DE 103 45 5084 A1 vorgeschlagen, die Anströmkante des Sensorträgers abgerundet auszugestalten, um die Strömungsqualität am Sensorträger und am Sensorchip zu verbessern und um pulsierende, instationäre Ablösungen zu vermeiden. Analog wird in EP 0 720 723 B1 vorgeschlagen, die Anströmkante abgerundet oder gegebenenfalls keilförmig auszugestalten, um Wirbel- oder Ablösegebiete an der Oberfläche des Sensorchips zu vermeiden.

Diese Konturierung der Anströmkante des Sensorträgers mit einem im Schnitt abgerundeten Profil ist jedoch technisch vergleichsweise aufwändig zu realisieren. So erfordert beispielsweise die in DE 103 45 584 A1 beschriebene Anordnung in der Regel ein Anspritzen des Sensorträgers an das Blechbauteil des Bodenblechs des Elektronikmoduls, was konstruktiv vergleichsweise aufwändig ist. Wünschenswert wäre es daher, die Leiterplatte des Elektronikmoduls und das Bodenblech sowie den Sensorträger aus einem Stück herzustellen und durch eine einzelne Leiterplatte zu ersetzen. In diesem Fall wäre jedoch eine Konturierung mit einer abgerundeten Anströmkante, wie dies im Stand der Technik beschrieben wird, technisch nur sehr aufwändig zu realisieren, da die Verwendung der Leiterplatte in der Regel die Wahl des Querschnitts des Sensorträgers einschränkt.

EP1 065 476 A1 offenbart eine Sensoranordnung zur Bestimmung der Durchflussrate einer durch einen Kanal strömenden Ansaugluftmasse einer Brennkraftmaschine, wobei die Sensoranordnung einen in dem Kanal angeordneten Sensorchip zur Bestimmung der Durchflussrate der Ansaugluftmasse aufweist, wobei der Sensorchip in einem in den Kanal ragenden Sensorträger aufgenommen ist, wobei der Sensorträger eine quer zur Strömung der Ansaugluftmasse angeordnete Anströmkante aufweist, wobei der Sensorträger als mehrschichtiger Sensorträger ausgeführt ist und die Anströmkante durch unterschiedliche Dimensionierung der Trägerschichten gestuft ausgeführt ist. DE 27 51 159 A1 offenbart eine Sensoranordnung zur Bestimmung der Durchflussrate einer durch einen Kanal strömenden Ansaugluftmasse einer Brennkraftmaschine, wobei die Sensoranordnung einen in dem Kanal angeordneten Sensor zur Bestimmung der Durchflussrate der Ansaugluftmasse aufweist, wobei der Sensor auf einem in den Kanal ragenden Sensorträger angebracht ist. Der vordere Teil des Sensorträgers kann als Turbulator wirken.

### Offenbarung der Erfindung

Es wird daher eine Sensoranordnung zur Bestimmung wenigstens eines Parameters eines durch einen Kanal strömenden fluiden Mediums vorgeschlagen, welche auch bei Verwendung einer Leiterplatte als Sensorträger anstelle eines aufwändig geformten Sensorträgers eine ausreichende Strömungsqualität am Sensorchip liefert, ohne pulsierende, instationäre Ablösungen zu induzieren. Die Sensoranordnung kann beispielsweise wieder zur Bestimmung eines Luftmassendurchsatzes, beispielsweise einer Ansaugluftmasse einer Brennkraftmaschine, eingesetzt werden. Alternativ oder zusätzlich können jedoch auch andere Parameter des fluiden Mediums, beispielsweise andere physikalische und/oder chemische Parameter wie Druck, Temperatur oder ähnliche Parameter des strömenden fluiden Mediums, gemessen werden. Es kann beispielsweise auf den oben beschriebenen Stand der Technik verwiesen werden.

Die Sensoranordnung weist mindestens einen in dem von dem strömenden fluiden Medium durchströmten Kanal angeordneten Sensorchip zur Bestimmung des Parameters des fluiden Mediums auf. Der Sensorchip kann beispielsweise in bekannter Halbleitertechnik hergestellt sein, beispielsweise als Silizium-Sensorchip, und kann eine Sensoroberfläche aufweisen, welche von dem fluiden Medium überströmt werden kann. Diese Sensoroberfläche kann beispielsweise ein oder mehrere Sensorelemente zur Bestimmung des Parameters aufweisen, beispielsweise einen oder mehrere Heizwiderstände, einen oder mehrere Temperaturfühler oder ähnliches.

Der Kanal kann beispielsweise ein Messkanal in einem Steckfühler der Sensoranordnung sein, welcher in das strömende fluide Medium eingesteckt wird. Durch den Kanal kann dementsprechend beispielsweise eine für die Strömung des fluiden Mediums repräsentative Menge des fluiden Mediums pro Zeiteinheit fließen, wie dies aus bekannten Heißfilmluftmassenmesser-Sensoranordnungen bekannt ist.

Der Sensorchip ist in einem in den Kanal ragenden Sensorträger aufgenommen. Unter einer Aufnahme in dem Sensorträger kann dabei, wie aus dem Stand der Technik bekannt, beispielsweise eine Aufnahme auf einer Oberfläche des Sensorträgers und/oder eine Aufnahme in einer Vertiefung des Sensorträgers zu verstehen sein, wobei beispielsweise die Aufnahme derart erfolgen kann, dass die Sensoroberfläche des Sensorchips von dem strömenden fluiden Medium überströmt werden kann. Als Sensorträger kommt grundsätzlich eine beliebige Struktur infrage, welche eine erforderliche mechanische Stabilität bereitstellt, um den Sensorchip im Wesentlichen an einem festen Ort innerhalb des Kanals zu halten. Beispielsweise kann dieser Sensorträger als flaches, scheibenförmiges Element mit beliebigem Querschnitt ausgestaltet sein, so dass die flache Seite dieses Sensorträgers der Strömung entgegen weist und einen vergleichsweise geringen Strömungswiderstand bietet.

Der Sensorträger weist, wie auch im Stand der Technik, eine quer zur Strömung des fluiden Mediums angeordnete Anströmkante auf. Unter "quer zur Strömung" ist dabei eine Anordnung zu verstehen, bei welcher die Anströmkante mit der lokalen Hauptströmungsrichtung des fluiden Mediums durch den Kanal am Ort des Sensorträgers einen Winkel einschließt, welcher von 0° verschieden ist. Wie unten näher ausgeführt, muss dieser Winkel jedoch nicht notwendigerweise 90° betragen, sondern es können Anströmwinkel zwischen 0° und 90° vorgesehen sein, beispielsweise Anströmwinkel zwischen 30° und 80°.

Ein Grundgedanke der Erfindung besteht darin, dass, anstelle einer technisch aufwändigen Konturierung der Anströmkante in einer Schnittebene senkrecht zur Längserstreckung des Sensorträgers, welche (wie beispielsweise in EP 0 720 723 B1 beschrieben) Wirbelbildungen und Ablösegebiete vermeiden soll, derartige Ablösegebiete auch durch eine gezielte Erzeugung von Längswirbeln zumindest weitgehend vermieden werden können. Diese Längswirbel sorgen für eine Stabilisierung der Strömung. Dementsprechend wird vorgeschlagen, die Anströmkante mit mindestens einem Turbulator auszugestalten. Dieser Turbulator soll eingerichtet sein, um Wirbel, insbesondere Längswirbel, in dem strömenden fluiden Medium im Bereich des Sensorträgers, also in Strömungsrichtung hinter der Anströmkante, auszubilden.

Diese Wirbel, insbesondere die Längswirbel, bedingen eine verbesserte Durchmischung zwischen schnellem, wandfernerem Fluid und langsamerem, ablösegefährdetem, wandnahem Fluid im Bereich des Sensorträgers. Diese Durchmischung fördert eine Vermeidung von Ablösungen. Diese erforderlichen Längswirbel werden durch den Turbulator an der Anströmkante des Sensorträgers erzeugt. Dadurch lassen sich am Sensorträger Ablösungen vermeiden, insbesondere an einer der Sensoroberfläche des Sensorchips gegenüberliegenden Unterseite des Sensorträgers. Hierdurch verringert sich die Strömungsfluktuation im Bereich des Sensorträgers, woraus sich ein verringertes Signalrauschen und eine bessere Reproduzierbarkeit des Signals ergibt.

Im Gegensatz zu der vergleichsweise technisch aufwändigen Profilierung der Anströmkante in einer Schnittebene senkrecht zur Längserstreckung des Sensorträgers, wie beispielsweise den in der DE 103 45 584 A1 oder in EP 0 720 723 B1 beschriebenen Ausgestaltung, lässt sich der vorgeschlagene Turbulator an der Anströmkante vergleichsweise einfach erzeugen und ist auch für Konstruktionen geeignet, in welchen (siehe unten) der Sensorträger ganz oder teilweise durch eine Leiterplatte ersetzt wird. Insbesondere kann der Turbulator durch eine Konturierung der Anströmkante entlang ihrer Längserstreckungsrichtung ersetzt werden. So kann die Anströmkante in ihrer Längserstreckungsrichtung, also entlang dieser Anströmkante, eine oder mehrere der folgenden Konturen aufweisen, welche auch wiederholt oder in Kombination eingesetzt werden können: Ein Wellenprofil, ein Zickzackprofil, ein Dreiecksprofil, insbesondere ein Dreiecksprofil mit einer Mehrzahl von in der Längserstreckungsrichtung aneinander gereihten Dreiecken, ein Profil mit mindestens einer Aussparung, insbesondere einer runden Aussparung, insbesondere ein Profil mit einer Mehrzahl von in der Längserstreckungsrichtung aneinander gereihten runden Aussparungen. Beispiele derartiger Konturen werden unten näher erläutert.

Diese Konturierungen können insbesondere vollständig in einer Ebene parallel zur Erstreckungsebene des Sensorträgers ausgebildet sein. Diese ebenen Konturierungen lassen sich daher, im Gegensatz zu den Profilierungen in einer Schnittebene senkrecht zu dieser Längserstreckungsebene des Sensorträgers, technisch beispielsweise durch einfaches Sägen, Schneiden, Laserschneiden, Fräsen, Erodieren, Ätzen oder ähnliches herstellen, ohne dass hierfür aufwändige Herstellungsprozesse erforderlich sind.

Die Längswirbel können auf einer oder auf beiden Seiten des Sensorträgers ausgebildet werden, beispielsweise abhängig vom Verlauf der Kontraktion, also der Verengung, in dem Messkanal. Insbesondere können die Längswirbel unterhalb des Sensorträgers angeordnet sein. Alternativ oder zusätzlich sind jedoch auch Anordnungen denkbar, bei welchen diese Längswirbel über dem Sensorelement verlaufen.

Anstelle der genannten Konturen sind auch andere Formen der Anströmkante möglich, solange diese eingerichtet sind, um die für die Durchmischung erforderlichen Wirbel zu erzeugen, insbesondere Längswirbel. Die Kontur selbst ist beispielsweise abhängig vom verwendeten Herstellungsverfahren. Es kann, wie oben beschrieben, beispielsweise ein Sägen, ein Fräsen, ein Laserschneiden oder ähnliches, beispielsweise unter Verwendung von Werkzeugen wie Fräsen, Lasern oder ähnlichen Werkzeugen infrage kommen. Diese Konturierung kann auch dreidimensional erfolgen, also beispielsweise in einer Dimension parallel zur Längserstreckung der Anströmkante und in einer Dimension senkrecht zur Längserstreckungsebene des Sensorträgers. Hierfür können beispielsweise schräge Fräsverfahren verwendet werden, beispielsweise unter einem Winkel von 30° oder 50° zur lotrechten senkrecht zur Längserstreckungsebene des Sensorträgers. Auch ein Fräsen eines Radius mittels eines Formfräsers, ein keilförmiges Profil durch eine gezielte plastische Verformung bei einem Stanzprozess oder ähnliches kann genutzt werden, um eine entsprechende Konturierung unter Ausbildung eines Turbulators zu erzielen.

Wie oben beschrieben, ist es im Rahmen der vorliegenden Erfindung besonders bevorzugt, wenn der Sensorträger ganz oder teilweise als Leiterplatte ausgestaltet ist oder Teil einer Leiterplatte ist. Beispielsweise kann die Leiterplatte einen Fortsatz aufweisen, welcher den Sensorträger bildet und welcher in den Kanal, beispielsweise den Messkanal, hineinragt. Der übrige Teil der Leiterplatte kann beispielsweise in einem Elektronikraum in einem Gehäuse der Sensoranordnung oder eines Steckfühlers der Sensoranordnung untergebracht sein.

Unter einer Leiterplatte ist dabei im Rahmen der vorliegenden Erfindung allgemein ein im Wesentlichen plattenförmiges Element zu verstehen, welches auch als Träger elektronischer Strukturen, wie beispielsweise Leiterbahnen, Anschlusskontakten oder ähnlichem, genutzt werden kann und vorzugsweise auch eine oder mehrere derartiger Strukturen aufweist. Grundsätzlich kommen dabei auch zumindest leichte Abweichungen von der Plattenform in Betracht und sollen begrifflich mit erfasst sein. Die Leiterplatte kann beispielsweise aus einem Kunststoffinaterial und/oder einem Keramikmaterial hergestellt sein, beispielsweise einem Epoxidharz, insbesondere einem faserverstärkten Epoxidharz. Insbesondere kann die Leiterplatte beispielsweise als Leiterplatte mit Leiterbahnen, insbesondere aufgedruckten Leiterbahnen (printed circuit board, PCB), ausgestaltet sein.

Auf diese Weise lässt sich, wie oben beschrieben, das Elektronikmodul der Sensoranordnung stark vereinfachen, und es lässt sich beispielsweise auf ein Bodenblech und einen separaten Sensorträger verzichten. Bodenblech und Sensorträger können durch eine einzige Leiterplatte ersetzt werden, auf welcher beispielsweise auch eine Ansteuer- und Auswerteschaltung der Sensoranordnung ganz oder teilweise angeordnet sein kann. Diese Ansteuer- und Auswerteschaltung der Sensoranordnung dient der Ansteuerung des mindestens einen Sensorchips und/oder der Auswertung der von diesem Sensorchip generierten Signale. Auf diese Weise lassen sich, durch Zusammenfassung der genannten Elemente, der Herstellaufwand der Sensoranordnung erheblich vermindern und der Bauraumbedarf für das Elektronikmodul stark verringern. Die Konturierung der Anströmkante mit dem mindestens einen Turbulator vermeidet gleichzeitig die oben beschriebene Problematik, dass bei derartigen zusammengefassten Elektronikmodulen eine Profilierung der Anströmkante des Sensorträgers, wie sie beispielsweise aus DE 103 45 584 A1 oder aus EP 0 720 723 B1 bekannt ist, schwierig ist. Dennoch lässt sich mittels der vorgeschlagenen Wirbelbildung eine gute Signalqualität, unter Vermeidung von Störungen durch pulsierende, instationäre Ablösungen, erzielen.

Die Sensoranordnung kann insbesondere mindestens ein Gehäuse aufweisen, wobei der Kanal in dem Gehäuse ausgebildet ist. Beispielsweise kann der Kanal einen Hauptkanal und einen Bypasskanal oder Messkanal umfassen, wobei der Sensorträger und der Sensorchip beispielsweise in dem Messkanal angeordnet sein können. Weiterhin kann das Gehäuse einen von dem Kanal getrennten Elektronikraum aufweisen, wobei das Elektronikmodul oder die Leiterplatte im Wesentlichen in dem Elektronikraum aufgenommen ist. Der Sensorträger kann dann als ein in den Kanal hineinragender Fortsatz der Leiterplatte ausgebildet sein. Diese Anordnung ist technisch vergleichsweise einfach zu realisieren, im Gegensatz zu den aufwändigen Elektronikmodulen, welche aus dem Stand der Technik bekannt sind.

Insbesondere in dem Fall, in welchem eine Leiterplatte als Sensorträger verwendet wird, jedoch auch in anderen Fällen und/oder unter Verwendung anderer Medien als Sensorträger, ist gemäß der Erfindung der Sensorträger zumindest teilweise als mehrschichtiger Sensorträger ausgestaltet. So ist der Sensorträger in einer so genannten Multilayer-Technik ausgestaltet und weist zwei oder mehrere miteinander verbundene Trägerschichten auf. Beispielsweise können diese Trägerschichten wiederum aus einem Metall, einem Kunststoff oder einem Keramikmaterial oder einem Verbundmaterial hergestellt sein und durch Verbindungstechniken wie zum Beispiel Kleben miteinander verbunden sein.

In der erfindungsgemäßen Sensoranordnung, in welcher eine Multilayer-Technik verwendet wird mit mehreren Trägerschichten des Sensorträgers, ist die Anströmkante durch eine unterschiedliche Dimensionierung der Trägerschichten entgegen der Strömungsrichtung des fluiden Mediums zumindest teilweise gestuft ausgeführt. Auf diese Weise lassen sich beispielsweise die aus dem Stand der Technik bekannten Profile zumindest gestuft angenähert realisieren. Beispielsweise lassen sich auf diese Weise, angenähert durch Stufenform, zumindest näherungsweise rund oder keilförmig profilierte Profile in einer Schnittebene senkrecht zur Erstreckungsebene des Sensorträgers ausbilden.

Weiterhin lassen sich durch diese Multilayer-Technik auch Konturierungen der Anströmkante in deren Längserstreckungsrichtung erzielen, beispielsweise eine oder mehrere der oben beschriebenen Konturierungen. Erfindungsgemäß sind die Trägerschichten entlang der Anströmkante zumindest teilweise unterschiedlich zueinander konturiert, um den mindestens einen Turbulator auszubilden. Beispielsweise können benachbarte Trägerschichten eine unterschiedlich konturierte Anströmseite aufweisen, wobei diese Anströmseiten gemeinsam die Anströmkante bilden. Auf diese Weise lassen sich beispielsweise Zacken, Dreiecke, Aussparungen oder ähnliches in der Anströmkante erzeugen, um den beschriebenen Turbulator zu bilden.

Wie oben dargestellt, kann die Anströmkante derart in den Kanal positioniert sein, dass diese von dem strömenden Medium unter einem von 90° verschiedenen Winkel angeströmt wird. Dennoch kann der Sensorchip auf bzw. in dem Sensorträger derart angeordnet sein, dass sich dieser senkrecht zur lokalen Hauptströmungsrichtung ausrichtet. Beispielsweise kann der Sensorchip rechteckig ausgestaltet sein, wobei eine Seite dieses Rechtecks senkrecht oder im Wesentlichen senkrecht, beispielsweise mit einer Ausrichtung, welche um nicht mehr als 10° von der Senkrechten abweicht, zur lokalen Hauptströmungsrichtung angeordnet ist.

Der Sensorchip kann über mindestens eine elektrische Verbindung elektrisch kontaktiert werden. Beispielsweise kann der Sensorträger, insbesondere eine den Sensorträger bildende Leiterplatte oder ein Fortsatz dieser Leiterplatte, eine oder mehrere Leiterbahnen und/oder Kontaktpads aufweisen, welche mit entsprechenden Kontakten auf dem Sensorchip beispielsweise durch ein Bonding-Verfahren verbunden sind. In diesem Fall kann die elektrische Verbindung durch mindestens eine Abdeckung geschützt und von dem fluiden Medium getrennt werden. Diese Abdeckung kann insbesondere als so genannter Glob Top ausgestaltet sein, also beispielsweise als Kunststofftropfen und/oder Klebstofftropfen, welcher die elektrische Verbindung, beispielsweise die Bond-Drähte, abdeckt. Auf diese Weise lassen sich insbesondere auch Beeinflussungen der Strömung durch die elektrische Verbindung vermindern, da der Glob Top eine glatte Oberfläche aufweist.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1A: eine perspektivische Darstellung einer bekannten Sensoranordnung;
- Figur 1B: eine perspektivische Detaildarstellung eines Sensorträgers der Sensoranordnung gemäß Figur 1;
- Figur 2: eine zu Figur 1 alternative Ausgestaltung der Sensoranordnung;
- Figur 3: eine Abwandlung der Sensoranordnung gemäß Figur 2;
- Figuren 4A und 4B: eine Gegenüberstellung eines Sensorträgers ohne Turbulator (Figur 4A) und mit Turbulator (Figur 4B) in einer Schnittdarstellung in der Schnittebene B-B in Figur 3;
- Figur 4C: eine Schnittdarstellung der Sensoranordnung mit Turbulator gemäß Figur 3 entlang der Schnittlinie A-A;
- Figuren 5A und 5B: zu Figur 3 alternative Ausgestaltungen der Anströmkante des Sensorträgers;
- Figur 6: ein nicht erfindungsgemäßes Ausführungsbeispiel eines Sensorträgers in Multilayer-Technik; und
- Figur 7: eine erfindungsgemäße Abwandlung des Sensorträgers gemäß Figur 6 mit unterschiedlich konturierten Trägerschichten.

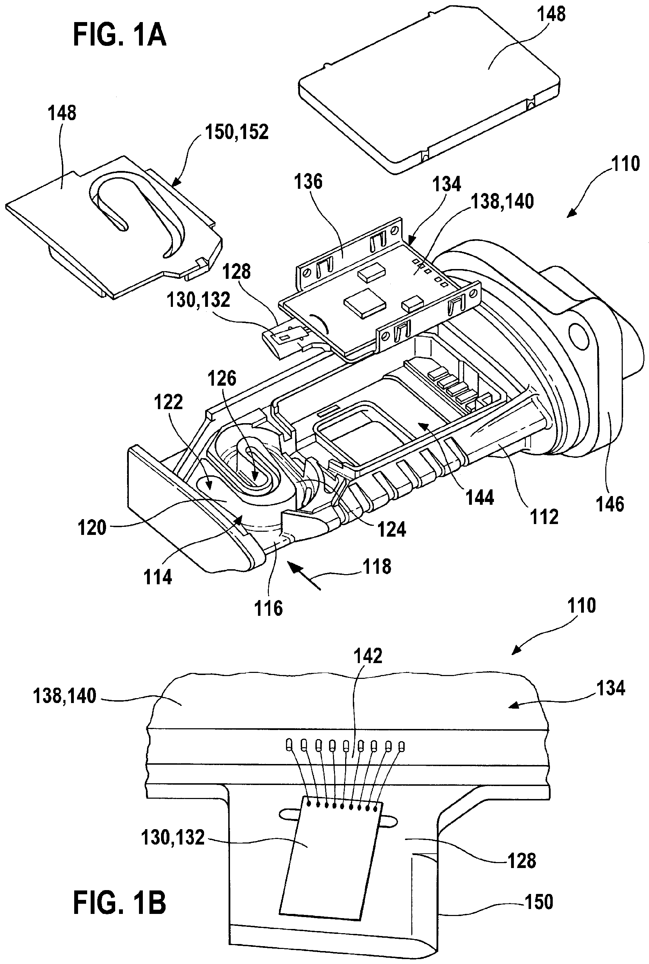

In den Figuren 1A und 1B ist eine dem Stand der Technik entsprechende Sensoranordnung 110 zur Bestimmung eines Parameters eines fluiden Mediums dargestellt. Die Sensoranordnung 110 ist in diesem Ausführungsbeispiel als Heißfilmluftmassenmesser ausgestaltet und umfasst ein Steckerteil 112, welches beispielsweise in ein Strömungsrohr, insbesondere einen Ansaugtrakt einer Brennkraftmaschine, eingesteckt werden kann. In dem Steckerteil ist eine Kanalstruktur 114 aufgenommen, welche in Figur 1A lediglich teilweise erkennbar ist und durch welche über eine Einlassöffnung 116, die im eingesetzten Zustand einer Hauptströmungsrichtung 118 des fluiden Mediums entgegenweist, eine repräsentative Menge des fluiden Mediums strömen kann.

Die Kanalstruktur 114 weist einen Hauptkanal 120 auf, welcher in einem Hauptstromauslass 122 auf der Unterseite des Steckerteils 112 in Figur 1A mündet, sowie einen von dem Hauptkanal 120 abzweigenden Messkanal 124, welcher in einem, ebenfalls auf der Unterseite des Steckerteils 112 angeordneten Messkanalauslass 126 mündet.

In den Messkanal 124 ragt ein Sensorträger 128 in Form eines Flügels. In diesen Sensorträger 128 ist ein Sensorchip 130 eingelassen, derart, dass eine Sensoroberfläche 132 von dem fluiden Medium überströmt wird. Wie in Figur 1A erkennbar, ist der Sensorträger 128 mit dem Sensorchip 130 Bestandteil eines Elektronikmoduls 134. Dieses Elektronikmodul weist ein gebogenes Bodenblech 136 als Träger sowie eine darauf aufgebrachte, beispielsweise aufgeklebte, Leiterplatte 138 mit einer Ansteuer- und Auswerteschaltung 140 auf. Der Sensorträger 128 kann beispielsweise als Kunststoffbauteil an das Bodenblech 136 angespritzt sein.

In Figur 1B ist eine perspektivische Darstellung des Sensorträgers 128 mit Blickrichtung auf das Elektronikmodul 134 gezeigt. Dabei ist erkennbar, dass der Sensorchip 130 mit der Ansteuer- und Auswerteschaltung 140 über elektrische Verbindungen 142, welche hier als Draht-Bonding ausgestaltet sind, elektrisch verbunden ist.

Das derart entstandene Elektronikmodul 134 wird in einen Elektronikraum 144 in einem Gehäuse 146 des Steckerteils 112, in welchem auch die Kanalstruktur 114 ausgebildet ist, eingebracht, beispielsweise eingeklebt. Dies erfolgt derart, dass der Sensorträger 128 dabei in die Kanalstruktur 114 hineinragt. Anschließend werden der Elektronikraum 144 und die Kanalstruktur 114 durch Deckel 148 verschlossen.

Wie insbesondere in Figur 1B erkennbar ist, ist der Sensorträger 128, welcher beispielsweise als Spritzgießbauteil an das Bodenblech 136 angespritzt ist, mit einer Anströmkante 150 versehen, welche abgerundet ausgestaltet ist. Beispielsweise kann diese Anströmkante 150 ähnlich einer Tragflächenform bei stetiger Kontur realisiert werden. Dies bedeutet jedoch, dass der Sensorträger 128 in der Regel einzeln gefertigt werden muss und daher in der Regel nicht mehrfach in einem Nutzen prozessiert werden kann.

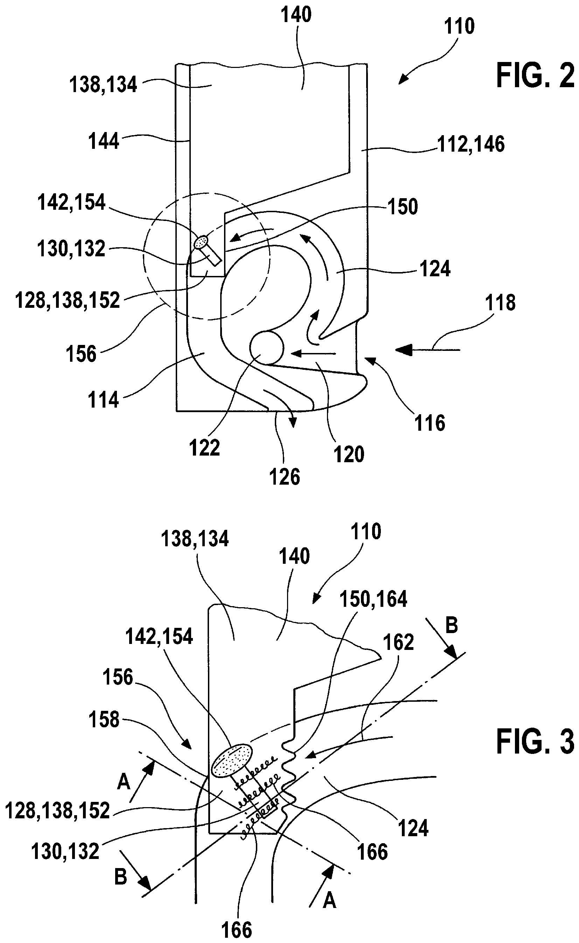

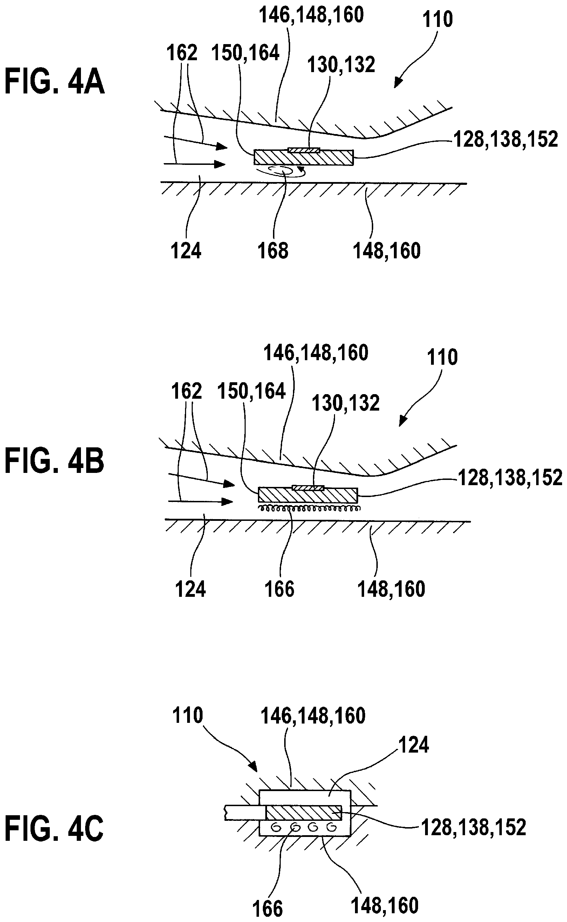

Dieser Nachteil macht sich insbesondere bei einer weiteren Ausführungsform einer Sensoranordnung 110 bemerkbar, welche in Figur 2 dargestellt ist und welche derzeit kommerziell noch nicht erhältlich ist. Auch diese Sensoranordnung umfasst wiederum ein Steckerteil 112, welches grundsätzlich ähnlich zu dem Steckerteil 112 gemäß Figur 1A ausgestaltet ist, so dass weitgehend auf die obige Beschreibung verwiesen werden kann. Wiederum ist in diesem Steckerteil 112 eine Kanalstruktur 114 aufgenommen, in welche über eine Einlassöffnung 116 eine repräsentative Menge des fluiden Mediums, beispielsweise Luft, einströmen kann. Wiederum weist die Kanalstruktur 114 einen die Einlassöffnung 116 mit einem Hauptstromauslass 122 verbindenden Hauptkanal 120 auf, von welchem ein Messkanal 124 abzweigt, der schließlich in einem Messkanalauslass 126 mündet. Im Gegensatz zu der Ausführungsform in Figur 1A ist dieser Messkanalauslass 126 auf einer Unterseite des Steckerteils 112 angeordnet. Grundsätzlich wäre jedoch auch eine Anordnung auf der Rückseite des Steckerteils 112 in Figur 2 möglich, analog beispielsweise zur Darstellung gemäß Figur 1A.
Wiederum weist die Sensoranordnung 110 in der Ausführungsform gemäß Figur 2 ein im Wesentlichen in einem Elektronikraum 144 aufgenommenes Elektronikmodul 134 auf. Im Gegensatz zur Ausführungsform gemäß Figur 1A soll jedoch bei der Ausführungsform gemäß Figur 2 das Bodenblech 136 entfallen, und vollständig durch die Leiterplatte 138 ersetzt werden. Der Sensorträger 128 ist als Fortsatz 152 dieser Leiterplatte 138 ausgestaltet, welcher, analog zu Figur 1, durch einen Durchbruch in der Kanalwand der Kanalstruktur 114 in den Messkanal 124 hineinragt. Die Positionierung dieses Hineinragens ist dabei in Figur 2 leicht unterschiedlich zur Positionierung gemäß Figur 1A gewählt, was jedoch im Rahmen der vorliegenden Erfindung keinen grundsätzlichen Unterschied darstellt. Die Leiterplatte 138 kann beispielsweise als Hybrid-Leiterplatte, als PCB (Printed Circuit Board) oder als Keramik-Leiterplatte ausgestaltet sein, entsprechend bekannten Leiterplattentechniken. In dem als Sensorträger 128 fungierenden Fortsatz 152 ist wiederum ein Sensorchip 130 mit einer Sensoroberfläche 132 aufgenommen, wobei die Aufnahme auf der Oberfläche dieses Fortsatzes 152 erfolgen kann oder wiederum in einer Vertiefung dieses Fortsatzes 152. Der Sensorchip 130 ist mit der Ansteuer- und Auswerteschaltung 140 wiederum über elektrische Verbindungen 142 verbunden, welche in dem dargestellten Ausführungsbeispiel beispielsweise durch eine Abdeckung 154 in Form eines Glob Tops, also eines Klebstoff- oder Kunststofftropfens, geschützt sein können.
Die Sensoranordnung 110 gemäß Figur 2 bietet also den Vorteil, dass insbesondere das Elektronikmodul 134 stark vereinfacht werden kann und im Nutzen gefertigt werden kann. Allerdings stellt sich in diesem Fall die Schwierigkeit, dass, wie oben dargestellt, die Strömungsqualität am Sensorchip 130 und am Sensorträger 128 von entscheidender Bedeutung für die Signalqualität der Sensoranordnung 110 ist. Bei der Verwendung der Leiterplatte 138 auch als Sensorträger 128 ist jedoch eine Profilierung der Anströmkante 150, beispielsweise in einem Tragflächenprofil analog zur Figur 1B, technisch nur sehr schwer zu realisieren.
Zur Lösung dieser Problematik ist daher ein in Figur 2 gestrichelt umrandeter und mit der Bezugsziffer 156 bezeichneter Ausschnitt in Figur 3 in einer beispielhaften, nicht erfindungsgemäßen Abwandlung gezeigt. Für die Beschreibung der einzelnen Elemente kann weitgehend auf die Beschreibung der Figur 2 Bezug genommen werden. Wiederum ragt der Fortsatz 152 durch einen Durchbruch 158 in einer Wand 160 des Messkanals 124 in den Messkanal 124 hinein.
Wie in Figur 3 in der Detaildarstellung zu erkennen ist, weist die Anströmkante 150, welche von dem fluiden Medium mit der lokalen Strömungsrichtung 162 angeströmt wird, eine Konturierung auf. Unter einer Konturierung ist dabei eine Kontur entlang der Längserstreckung dieser Anströmkante 150 zu verstehen, im Gegensatz zu der in Figur 1B erkennbaren, aus dem Stand der Technik bekannten Profilierung in einer Schnittebene senkrecht zur Längserstreckungsebene des Sensorträgers 128. Eine Profilierung kann jedoch optional zusätzlich vorgesehen sein. Die Konturierung, welche von einer geraden Linie der Anströmkante 150 abweicht, enthält mindestens einen Turbulator 164. Dieser Turbulator 164 ist dabei in dem dargestellten Ausführungsbeispiel gewellt ausgeführt, weist also in Draufsicht ein Wellenprofil auf. Dadurch werden Längswirbel erzeugt, welche in der Figur 3 mit der Bezugsziffer 166 bezeichnet sind und welche, abhängig vom Verlauf der Kontraktion, das heißt der Strömungsführung und Strömungsverengung im Messkanal 124, unter oder über dem Sensorträger 128 liegen können.
Dies ist in den Figuren 4A und 4B verdeutlicht, welche jeweils eine Schnittdarstellung durch die Sensoranordnung 110 gemäß Figur 3 entlang der in Figur 3 mit B-B bezeichneten Schnittlinie darstellen. In diesen Darstellungen gemäß Figur 4A und 4B ist auch die Kontraktion im Messkanal 124 erkennbar, welche durch eine entsprechende Verengung im Deckel 148 bewirkt wird. Hierdurch wird die Strömung des fluiden Mediums auf den Sensorträger 128 hin gelenkt und beschleunigt.
Dabei zeigt Figur 4A den herkömmlichen Fall, in welchem der Fortsatz 152 der Leiterplatte 138 keinen Turbulator an seiner Anströmkante 150 aufweist, diese Anströmkante also einen geraden Verlauf zeigt. In diesem Fall bilden sich unterhalb des Sensorträgers 128 Ablösungen, welche in Figur 4A mit der Bezugsziffer 168 bezeichnet sind. Wie oben dargestellt, sind auch Ablösungen 168 oberhalb des Sensorträgers 128 möglich, je nach Kontraktion im Messkanal 124.

In Figur 4B ist hingegen der Fall dargestellt, in welchem die Anströmkante 150 eine Konturierung mit dem mindestens einen Turbulator 164 aufweist, beispielsweise der in Figur 3 gezeigten gewellten Form. Hierdurch bilden sich, in dem dargestellten Fall beispielsweise unterhalb des Sensorträgers 128, Längswirbel 166. Diese Längswirbel durchmischen schnelles, von der Wand des Sensorträgers 128 und von der Messkanalwand 160 entferntes Fluid mit langsamerem, ablösegefährdetem Fluid an der Oberfläche des Sensorträgers 128. Hierdurch lassen sich Ablösungen 168 wirksam vermeiden, und es erfolgt eine Stabilisierung der Strömung. In Figur 4C sind diese Längswirbel nochmals in einer Schnittdarstellung entlang der Schnittlinie A-A in Figur 3 dargestellt.

Der Vorteil der Konturierung gemäß Figur 3, bei welcher der Anströmkante 150 des Sensorträgers 128 ein Turbulator-Profil aufgeprägt wird, im Gegensatz zu einer Profilierung gemäß Figur 1B liegt darin, dass die Konturierung entlang der Anströmkante 150 technisch erheblich einfacher zu realisieren ist, da die Bearbeitung mit einem vergleichsweise einfachen Werkzeug senkrecht zur Fläche der Leiterplatte 138 erfolgen kann. So lässt sich das in Figur 3 beispielhaft gezeigte Wellenmuster technisch leicht realisieren, beispielsweise durch Stanzen, Fräsen, Sägen, Ätzen, Laserschneiden oder ähnliches. Entscheidend ist lediglich, dass die Konturierung genügend kräftige Längswirbel 166 erzeugt.

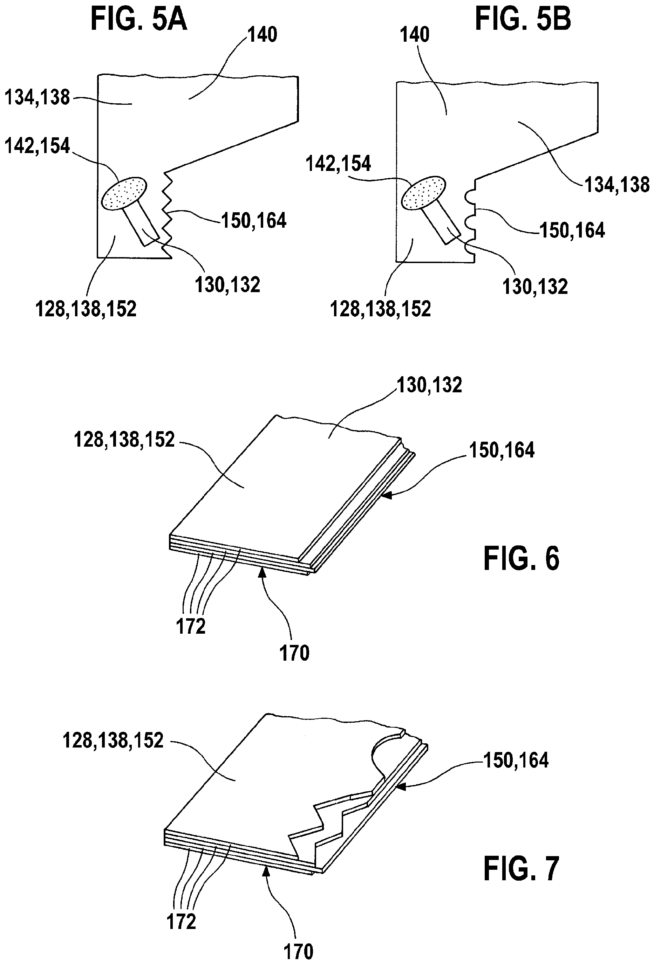

Anstelle des in Figur 3 gezeigten Wellenprofils als Turbulator 164 sind in den Figuren 5A und 5B alternative Ausführungsformen von Turbulatoren dargestellt, welche ebenfalls beispielsweise in der Sensoranordnung 110 gemäß Figur 2 eingesetzt werden können. Dabei zeigt Figur 5A ein Ausführungsbeispiel, in welchem der Turbulator 164 eine konturierte Anströmkante 150 mit einer Zickzackform oder Dreiecksform aufweist, wohingegen in dem Ausführungsbeispiel gemäß Figur 5B der Turbulator 164 runde Aussparungen in der ansonsten gerade verlaufenden Anströmkante 150 umfasst. Dabei kann die Konturierung der Anströmkante 150 grundsätzlich auch dreidimensional erfolgen, also neben oder zusätzlich zu einer Ausgestaltung mit Strukturen in der Zeichenebene in den Figuren 3, 5A und 5B mit einer Profilierung in einer Richtung senkrecht zur Zeichenebene. Diese dreidimensionale Konturierung der Turbulatoren 164 kann beispielsweise durch eine schräge Fräsung, beispielsweise durch eine Fräsung unter 30° oder 45° zur Lotrechten zur Zeichenebene in den Figuren 3, 5A und 5B erfolgen, durch Fräsen eines Radius mit Hilfe eines Formfräsers, als keilförmiges Profil durch gezielte plastische Verformung bei einem Stanzprozess oder ähnliches.

In den Figuren 6 und 7 wird dieser Gedanke einer dreidimensionalen Profilierung in weiteren Ausführungsbeispielen weiter verfolgt. Diese Ausführungsbeispiele beruhen auf der Erkenntnis, dass sich bei der Verwendung von Leiterplatten 138 als Sensorträger 128, beispielsweise wiederum in Form des Fortsatzes 152 in Figur 2 oder Figur 3, eine Profilierung und/oder eine Konturierung der Anströmkante 150 zur Erzeugung von Turbulatoren 164 besonders leicht durch einen Mehrschichtaufbau 170 realisieren lässt. Dieser Mehrschichtaufbau 170 umfasst eine Mehrzahl von Trägerschichten 172, welche beispielsweise aus herkömmlichen Leiterplattenmaterialien hergestellt sein können. Diese Trägerschichten 172 können beispielsweise miteinander verklebt sein.

Mittels dieses Mehrschichtaufbaus 170 ist eine dreidimensionale Profilierung der Anströmkante 150 möglich, welche sowohl eine ebene Bearbeitung als auch eine Handhabung im Nutzen möglich macht. Durch die gestuften Konturen im Bereich der Anströmkante 150 lassen sich Turbulatoren 164 bilden, welche wiederum Längswirbel 166 (in den Figuren 6 und 7 nicht dargestellt) ähnlich effizient wie die in den Figuren 3, 5A und 5B gezeigten Turbulatoren 164 erzeugen können. Insofern ist eine kontinuierliche Profilierung der Anströmkante 150, wie beispielsweise in Figur 1B, nicht erforderlich. Die Anströmkante 150 des Sensorträgers 128 ist quantisiert in den einzelnen Ebenen der Trägerschichten 172 dargestellt. Eine derartige Quantisierung durch eine Stufung des Profils der Anströmkante 150 könnte jedoch grundsätzlich auch realisiert werden, wenn als Leiterplatte 138 kein Mehrschichtaufbau 170 sondern ein Vollkörper verwendet wird. Auch hierdurch ließe sich der Effekt der Ausbildung von Turbulatoren 164 zur Ausbildung von Längswirbeln 166 erzeugen.

Der Mehrschichtaufbau 170 gemäß den Figuren 6 und 7 bietet nun erfindungsgemäß, zusätzlich zu den Vorteilen der Verwendung von Mehrfachnutzen, die Möglichkeit, die einzelnen Trägerschichten 172 an der Anströmkante 150 unterschiedlich zu konturieren. Dies ist in Figur 7 dargestellt. Hierbei ist erkennbar, dass nicht nur eine gestufte Ausbildung der einzelnen Trägerschichten 172 realisiert ist, sondern dass die einzelnen Trägerschichten 172 auch an ihrer der Anströmkante 150 zuweisenden Seite unterschiedlich konturiert sind. Auf diese Weise lassen sich gezielt Turbulatoren mit dreidimensionalen Profilen ausbilden.

## Patentansprüche

1. Sensoranordnung (110) zur Bestimmung wenigstens eines Parameters eines durch einen Kanal (124) strömenden fluiden Mediums, insbesondere einer Ansaugluftmasse einer Brennkraftmaschine, wobei die Sensoranordnung (110) mindestens einen in dem Kanal (124) angeordneten Sensorchip (130) zur Bestimmung des Parameters des fluiden Mediums aufweist, wobei der Sensorchip (130) in einem in den Kanal (124) ragenden Sensorträger (128) aufgenommen ist, wobei der Sensorträger (128) eine quer zur Strömung des fluiden Mediums angeordnete Anströmkante (150) aufweist, wobei der Sensorträger (128) zumindest teilweise als mehrschichtiger Sensorträger (128) ausgestaltet ist und mindestens zwei miteinander verbundene Trägerschichten (172) aufweist und die Anströmkante (150) durch unterschiedliche Dimensionierung der Trägerschichten (172) zumindest teilweise gestuft ausgeführt ist, **dadurch gekennzeichnet, dass** die Anströmkante (150) mindestens einen Turbulator (164) aufweist, welcher eingerichtet ist, um Wirbel (166) in dem strömenden fluiden Medium im Bereich des Sensorträgers (128) auszubilden, und die Trägerschichten (172) entlang der Anströmkante (150) zumindest teilweise unterschiedlich konturiert sind, um den Turbulator (164) zu bilden.

2. Sensoranordnung (110) nach dem vorhergehenden Anspruch, wobei die Anströmkante (150) eine Längserstreckungsrichtung aufweist, wobei die Anströmkante (150) in Längserstreckungsrichtung eine oder mehrere der folgenden Konturen aufweist: ein Wellenprofil; ein Zickzackprofil; ein Dreiecksprofil, insbesondere ein Dreiecksprofil mit einer Mehrzahl von in Längserstreckungsrichtung aneinandergereihten Dreiecken; ein Profil mit mindestens einer Aussparung, insbesondere einer runden Aussparung, insbesondere ein Profil mit einer Mehrzahl von in Längserstreckungsrichtung aneinandergereihten runden Aussparungen.

3. Sensoranordnung (110) nach einem der vorhergehenden Ansprüche, wobei der Turbulator (164) derart ausgestaltet ist, dass sich auf einer dem Sensorchip (130) gegenüberliegenden Oberfläche des Sensorträgers (128) Längswirbel in der Strömung des fluiden Mediums ausbilden.

4. Sensoranordnung (110) nach einem der vorhergehenden Ansprüche, wobei der Sensorträger (128) Teil einer Leiterplatte (138) ist.

5. Sensoranordnung (110) nach dem vorhergehenden Anspruch, wobei mindestens eine Ansteuer- und Auswerteschaltung (140) der Sensoranordnung (110) ganz oder teilweise auf der Leiterplatte (138) angeordnet ist.

6. Sensoranordnung (110) nach einem der beiden vorhergehenden Ansprüche, wobei die Sensoranordnung (110) mindestens ein Gehäuse (146) aufweist, wobei der Kanal (124) in dem Gehäuse (146) ausgebildet ist und wobei das Gehäuse (146) einen von dem Kanal (124) getrennten Elektronikraum (144) aufweist, wobei die Leiterplatte (138) im Wesentlichen in dem Elektronikraum (144) aufgenommen ist und wobei der Sensorträger (128) als ein in den Kanal (124) hineinragender Fortsatz (152) der Leiterplatte (138) ausgebildet ist.

7. Sensoranordnung (110) nach dem vorhergehenden Anspruch, wobei der Fortsatz (152) an der Anströmkante (150) in einer Schnittebene senkrecht zur Leiterplatte (138) zumindest teilweise gestuft ausgestaltet ist.

8. Sensoranordnung (110) nach einem der vorhergehenden Ansprüche, wobei die Anströmkante (150) derart in dem Kanal (124) positioniert ist, dass diese von dem strömenden Medium um einen von 90° verschiedenen Winkel angeströmt wird.

9. Sensoranordnung (110) nach einem der vorhergehenden Ansprüche, wobei der Sensorchip (130) über mindestens eine elektrische Verbindung (142) elektrisch kontaktiert wird, insbesondere über ein Bonding, wobei die elektrische Verbindung (142) durch mindestens eine Abdeckung (154), insbesondere einen Glob Top, von dem fluiden Medium getrennt ist.

## Claims

1. Sensor arrangement (110) for determining at least one parameter of a fluid medium flowing through a channel (124), in particular an intake air mass of an internal combustion engine, wherein the sensor arrangement (110) has at least one sensor chip (130), which is arranged in the channel (124), for determining the parameter of the fluid medium, wherein the sensor chip (130) is accommodated in a sensor carrier (128) which protrudes into the channel (124), wherein the sensor carrier (128) has a leading edge (150) which is arranged transverse to the flow of the fluid medium, wherein the sensor carrier (128) is designed at least partially as a multilayer sensor carrier (128) and has at least two carrier layers (172) which are connected to one another, and the leading edge (150) is designed at least partially in a stepped manner by different dimensioning of the carrier layers (172), **characterized in that** the leading edge (150) has at least one turbulator (164) which is designed in order to form vortices (166) in the flowing fluid medium in the region of the sensor carrier (128), and the carrier layers (172) are at least partially differently contoured along the leading edge (150) in order to form the turbulator (164).

2. Sensor arrangement (110) according to the preceding claim, wherein the leading edge (150) has a direction of longitudinal extent, wherein the leading edge (150) has one or more of the following contours in the direction of longitudinal extent: an undulating profile; a zigzag profile; a triangular profile, in particular a triangular profile with a plurality of triangles which are lined up with one another in the direction of longitudinal extent; a profile with at least one cutout, in particular a round cutout, in particular a profile with a plurality of round cutouts which are lined up with one another in the direction of longitudinal extent.

3. Sensor arrangement (110) according to either of the preceding claims, wherein the turbulator (164) is designed in such a way that longitudinal vortices in the flow of the fluid medium form on a surface of the sensor carrier (128) which is situated opposite the sensor chip (130).

4. Sensor arrangement (110) according to one of the preceding claims, wherein the sensor carrier (128) is part of a printed circuit board (138).

5. Sensor arrangement (110) according to the preceding claim, wherein at least one drive and evaluation circuit (140) of the sensor arrangement (110) is arranged entirely or partially on the printed circuit board (138).

6. Sensor arrangement (110) according to one of the two preceding claims, wherein the sensor arrangement (110) has at least one housing (146), wherein the channel (124) is formed in the housing (146), and wherein the housing (146) has an electronics space (144) which is separate from the channel (124), wherein the printed circuit board (138) is accommodated substantially in the electronics space (144), and wherein the sensor carrier (128) is designed as a projection (152) of the printed circuit board (138) which protrudes into the channel (124).

7. Sensor arrangement (110) according to the preceding claim, wherein the projection (152) is designed at least partially in a stepped manner in a sectional plane perpendicular to the printed circuit board (138) at the leading edge (150).

8. Sensor arrangement (110) according to one of the preceding claims, wherein the leading edge (150) is positioned in the channel (124) in such a way that the flowing medium flows against the said leading edge at an angle which is different from 90°.

9. Sensor arrangement (110) according to one of the preceding claims, wherein electrical contact is made with the sensor chip (130) by means of at least one electrical connection (142), in particular by means of a bonding, wherein the electrical connection (142) is separated from the fluid medium by at least one covering (154), in particular a glob top.

## Revendications

1. Arrangement capteur (110) destiné à déterminer au moins un paramètre d'un milieu fluide qui s'écoule à travers un canal (124), notamment d'une masse d'air aspiré d'un moteur à combustion interne, l'arrangement capteur (110) possédant au moins une puce de capteur (130) disposée dans le canal (124) et destinée à déterminer le paramètre du milieu fluide, la puce de capteur (130) étant accueillie dans un porte-capteur (128) qui fait saillie dans le canal (124), le porte-capteur (128) possédant un bord d'attaque (150) disposé transversalement par rapport l'écoulement du milieu fluide, le porte-capteur (128) étant au moins partiellement réalisé sous la forme d'un porte-capteur (128) à plusieurs couches et possédant au moins deux couches porteuses (172) reliées entre elles et le bord d'attaque (150) étant réalisé au moins partiellement en escalier par un dimensionnement différent des couches porteuses (172), **caractérisé en ce que** le bord d'attaque (150) possède au moins un générateur de tourbillons (164) qui est conçu pour former des tourbillons (166) dans le milieu fluide qui s'écoule dans la zone du porte-capteur (128) et les couches porteuses (172) ayant des profilés au moins partiellement différents le long du bord d'attaque (150) afin de former le générateur de tourbillons (164).

2. Arrangement capteur (110) selon la revendication précédente, le bord d'attaque (150) possédant un sens d'extension longitudinale, le bord d'attaque (150) possédant un ou plusieurs des profilés suivants dans le sens d'extension longitudinale : un profilé ondulé ; un profilé en zigzag ; un profilé triangulaire, notamment un profilé triangulaire pourvu d'une pluralité de triangles juxtaposés dans le sens de l'extension longitudinale ; un profilé comportant au moins une cavité, notamment une cavité ronde, notamment un profilé comportant une pluralité de cavités rondes juxtaposées dans le sens de l'extension longitudinale.

3. Arrangement capteur (110) selon l'une des revendications précédentes, le générateur de tourbillons (164) étant configuré de telle sorte que des tourbillons longs se forment dans l'écoulement du milieu fluide sur une surface du porte-capteur (128) qui se trouve à l'opposé de la puce de capteur (130).

4. Arrangement capteur (110) selon l'une des revendications précédentes, le porte-capteur (128) faisant partie d'un circuit imprimé (138).

5. Arrangement capteur (110) selon l'une des revendications précédentes, au moins un circuit d'attaque et d'interprétation (140) de l'arrangement capteur (110) étant entièrement ou partiellement disposé sur le circuit imprimé (138).

6. Arrangement capteur (110) selon l'une des deux revendications précédentes, l'arrangement capteur (110) possédant au moins un boîtier (146), le canal (124) étant formé dans le boîtier (146) et le boîtier (146) possédant un espace d'électronique (144) séparé du canal (124), le circuit imprimé (138) étant sensiblement accueilli dans l'espace d'électronique (144) et le porte-capteur (128) étant réalisé sous la forme d'un prolongement (152) du circuit imprimé (138) qui fait saillie à l'intérieur du canal (124).

7. Arrangement capteur (110) selon la revendication précédente, le prolongement (152) étant de configuration au moins partiellement en escalier au niveau du bord d'attaque (150) dans un plan de coupe perpendiculaire au circuit imprimé (138).

8. Arrangement capteur (110) selon l'une des revendications précédentes, le bord d'attaque (150) étant positionné dans le canal (124) de telle sorte qu'il est frappé par le milieu qui s'écoule à un angle différent de 90°.

9. Arrangement capteur (110) selon l'une des revendications précédentes, la puce de capteur (130) étant mise en contact électrique par le biais d'au moins une liaison électrique (142), notamment par le biais d'une connexion, la liaison électrique (142) étant séparée du milieu fluide par au moins un capotage (154), notamment un Glob Top.
